# EUROPÄISCHE PATENTSCHRIFT

(11) **EP 0 974 478 B1**
(45) Veröffentlichungstag und Bekanntmachung des Hinweises auf die Patenterteilung: **09.02.2005**
(21) Anmeldenummer: 99111884.5
(22) Anmeldetag: 21.06.1999
(51) Int. Cl.: B60J 5/04

(54) **Türmodul für Kraftfahrzeuge mit Funktionselementen aus Kunststoff**
Door module for motor vehicles with functional parts of plastic
Module de porte pour véhicules à moteur avec éléments de construction en plastique

(30) Priorität: 23.07.1998 DE 19833185
(43) Veröffentlichungstag der Anmeldung: 26.01.2000
(73) Patentinhaber: Ticona GmbH, 65451 Kelsterbach (DE)
(72) Erfinder: Pfeiffer, Bernhard, Dr., 65510 Hünstetten (DE); Haack, Ulrich, 64665 Alsbach-Hähnlein (DE); Reuter, Frank, 63853 Mömlingen (DE)

(56) Entgegenhaltungen:
- WO-A-97/06024
- DE-A- 19 537 504
- DE-A- 19 543 135
- US-A- 4 848 829
- US-A- 5 716 575

## Beschreibung

Die vorliegend Erfindung betrifft einen einstückigen Türmodul für Kraftfahrzeuge umfassend eine selbsttragende Trägerplatte aus Metall (z.B. Stanzbiegeblech) und eine Vielzahl von Halteelementen in Form von Erhebungen, Vertiefungen und Ausnehmungen, mit dem die Montage der Kraftfahrzeuge erleichtert wird.

Die fortschreitende Automatisierung bei der Montage von Kraftfahrzeugen macht es notwendig oder mindestens in hohem Maße wünschenswert, dass zusammengehörende Montageeinheiten aus starren und beweglichen Teilen möglichst schon vor ihrem endgültigen Einbau in das entstehende Kraftfahrzeug für sich zusammengefügt und auf ihre bestimmungsgemäße Funktionsfähigkeit geprüft werden können.

Üblicherweise bestehen herkömmliche Türmodule aus einer Metallplatte, an die notwendige Funktionselemente wie Halteund Führungselemente nachträglich angeschraubt oder angeschweisst werden. Türmodule aus Metall haben vorteilhafterweise eine relativ hohe Eigenstabilität. Allerdings lassen sich nicht alle Funktionselemente unmittelbar aus Metall ausbilden, sondern sie umfassen zusätzlich andere Materialien, meist Kunststoff, was eine nachträgliche Bearbeitung des vorgefertigten Metallkörpers erforderlich macht, um die Funktionselemente aus anderen Materialien an ihrem bestimmungsgemäßen Einsatzort beweglich oder unbeweglich zu fixieren. Solch ein gattungsgemäßen Türmodul ist aus WO 97/06024 bekannt.

Es bestand daher die Aufgabe, einen Türmodul mit einer metallischen Trägerplatte zu entwickeln, der großtechnisch einfach herzustellen ist, der aber bereits alle notwendigen Halte-, Führungs- und Bedienungselemente enthält und daher die maschinelle Montage noch weiter vereinfacht.

Gelöst wird diese Aufgabe durch einen Türmodul der eingangs genannten Gattung, dessen Kennzeichenmerkmale darin zu sehen sind, dass in einem Arbeitschnitt Kunststoff für die Funktionselemente an die vorgefertigte Trägerplatte aus Metall in genau definierten, lokal begrenzten Bereichen angespritzt wird und festhaftend und unlösbar mit dieser verbunden wird.

Unter einem Türmodul ist erfindungsgemäß eine einstückige selbsttragende Trägerplatte zu verstehen, die in ihrer dreidimensionalen Geometrie im wesentlichen der Geometrie der Kraftfahrzeugtür, in die sie eingebaut werden soll, angepasst ist. Die Schichtdicke der Trägerplatte kann zwischen 0,1 bis 5 cm variieren. Ein Türmodul stellt ein Halbzeug dar, in das üblicherweise die in der Fahrzeugtür angeordneten Bauteile wie Fensterheber, Türöffner, Lautsprecher und ähnliche eingesetzt werden und dann eine Funktionseinheit bilden.

Der erfindungsgemäße Türmodul umfasst eine Trägerplatte aus Metall. Als Metalle sind alle bieg- und stanzbaren Metalle geeignet wie z.B. Blech, bevorzugt sind aber solche, die eine hohe Korrosionsfestigkeit besitzen, beispielsweise verzinktes Blech. Leichtmetalle aus Aluminium- oder Magnesiumlegierungen sind besonders bevorzugt, sofern sie ausreichende mechanische Festigkeit besitzen.

Als integrale Bestandteile enthält der erfindungsgemäße Türmodul zahlreiche Funktionselemente aus Kunststoff. Das Merkmal integral bedeutet im Rahmen der Erfindung, dass die Funktionselemente mit der metallischen Trägerplatte eine Einheit bilden und nicht von dem Metallkörper losgelöst werden können. Realisiert wird dieses Merkmal durch die sogenannte Outsert-Technik. Die Outsert-Technik ist bekannt und beispielsweise in Kunststoff-Journal, Oktober 1994, Seiten 21 bis 23 beschrieben. Sie stellt eine Kombination von Stanzbiegeund Spritzgießtechnik dar, wobei in einem Arbeitsschritt der Kunststoff an die vorgefertigte Metallplatte in ganz genau definierten, lokal begrenzten Bereichen angespritzt wird. Die Fixierung der Funktionselemente aus Kunststoff erfolgt ohne Haftvermittler, sondern sie stellt eine mechanische Verankerung dar, bei der Kunststoff beispielsweise in schmelzflüssigen Zustand eine Kante umfließt und dann erstarrt. Die Outsert-Technik wird üblicherweise für Kleinbauteile für Elektrogeräte wie Autoradios oder Videorekorder angewandt, für Türmodule ist sie allerdings bislang noch nicht eingesetzt worden.

Als Kunststoffe für die Funktionselemente des erfindungsgemäßen Türmoduls sind thermoplastische Kunststoffmaterialien geeignet. Neben Standardpolymeren wie Polyolefinen sind vorzugsweise auch Kunststoffe auf Basis von Polypropylen, Polyamid, Polyester, Polyphenylenoxid, Polyoxymethylen Polyphenylensulfid, Polyurethan, Polycarbonat oder Blends aus Polyester mit Acrylnitril-Butadien-Styrol-Copolymeren oder mit Acrylnitril-Styrol-Acrylester-Pfropfpolymeren zu nennen, die ggf. auch mit Glasfaser oder Kohlenstofffaser verstärkt sein können. Als Polyester können insbesondere Polyethylenterephthalat oder Polybutylenterephthalat eingesetzt werden. Die Glasfaserverstärkung kann wahlweise mit Langfasern und/oder mit Kurzfasern bewirkt werden. Es ist erfindungsgemäß auch möglich, dass die einzelnen Funktionselemente aus unterschiedlichen Kunststoffen bestehen oder dass ein einziges Funktionselement aus mehreren verschiedenen Kunststoffen besteht. In diesem Fall müssen nur die Spritzgießschritte sequentiell oder simultan über mehrere Spritzgußaggregate durchgeführt werden.

Der erfindungsgemäße Türmodul besitzt eine Vielzahl von Funktionselementen, d.h. aus der Fläche der Trägerplatte hervorstehende Halte- und Führungselemente als integrale Bestandteile, in die beispielsweise auch ortsfest zu fixierende weitere Funktionselemente dauerhaft eingepasst werden können oder die geometrisch so ausgebildet sind, dass bewegliche Funktionselemente wie Zahnräder oder Hebel in ihrer bestimmungsgemäßen Bewegungsrichtung lenkend geführt werden. Unter den Begriff Funktionselemente fallen auch elektrische Komponenten, die elektrisch leitfähig direkt verbunden sind. Insbesondere sind Fensterheberschienen für das in der Kraftfahrzeugtür beweglich angeordnete Seitenfenster aus Glas in den erfindungsgemäßen Türmodul integriert oder ausgeklappt angespritzt sowie die Haltelemente für den die Bewegung der Seitenfenster bewirkenden Elektromotor. Vorzugsweise können auch noch Führungsschienen für das Seitenfenster in den seitenrandnahen Bereichen des erfindungsgemäßen Türmoduls mit integriert sein.

Zusätzlich kann es von besonderem Vorteil sein, wenn der Türmodul oder Teile der Funktionselemente, vorzugsweise wenigstens im Bereich der Fensterheberschienen für das Seitenfenster, einer besonderen Nachbehandlung unterzogen werden, um speziell dort, im Bereich der Fensterheberschienen, eine besonders hohe Verschleißfestigkeit gegenüber den Halterungselementen für die Seitenfenster zu gewährleisten. Die Halterungselemente für die Seitenfenster, die auf den Fensterheberschienen beweglich angeordnet sind, sind normalerweise aus Polyacetal, insbesondere aus Polyoxymethylen, gefertigt. Zur Nachbehandlung kann der erfindungsgemäße Türmodul einer Coronasprühentladung oder einer Plasmabehandlung oder einer Flammbehandlung unterzogen werden, die wenigstens im Bereich der Fensterheberschienen für das Seitenfenster zur Anwendung kommt.

In einer weiteren Ausgestaltung der Erfindung kann die Verschleißfestigkeit gegenüber den Halteelementen aus Polyoxymetylen auch durch Hinterpressen oder Hinterspritzen des Türmoduls im Bereich der kritischen Stellen der Fensterheberschienen für das Seitenfenster mit Kunststoffmaterial, das inhärent schon eine hohe Verschleißfestigkeit gegenüber Polyoxymethylen aufweist, realisiert werden.

In einer weiteren Ausgestaltung der Erfindung kann der Türmodul zusätzlich mit einer elektrisch isolierenden Folie aus Polyethylen, Polypropylen, Cycloolefincopolymer, Polyester, Polyphenylensulfid, Polyimid oder Polyetherimid kombiniert sein. Insbesondere können auf eine solche elektrisch isolierende Folie elektrische Leiterbahnen aufgebracht sein, die zur Verkabelung von elektrisch betriebenen Funktionselementen im Bereich des Türmoduls wie Fensterhebermotoren oder Lautsprecher dienen. Gleichzeitig kann die elektrisch isolierende Folie die wichtige Funktion einer zusätzlichen Feuchtigkeitssperre ausüben.

Nachfolgend soll die Erfindung beispielhaft anhand von Zeichnungen für den Fachmann noch deutlicher dargestellt werden.
**Figur 1** zeigt eine perspektivische Darstellung eines erfindungsgemäßen Türmoduls von der Seite, die dem Fahrgastinnenraum zugewandt ist.
**Figur 2** zeigt eine perspektivische Darstellung eines erfindungsgemäßen Türmoduls von der Seite, die dem Fahrgastinnenraum abgewandt ist.

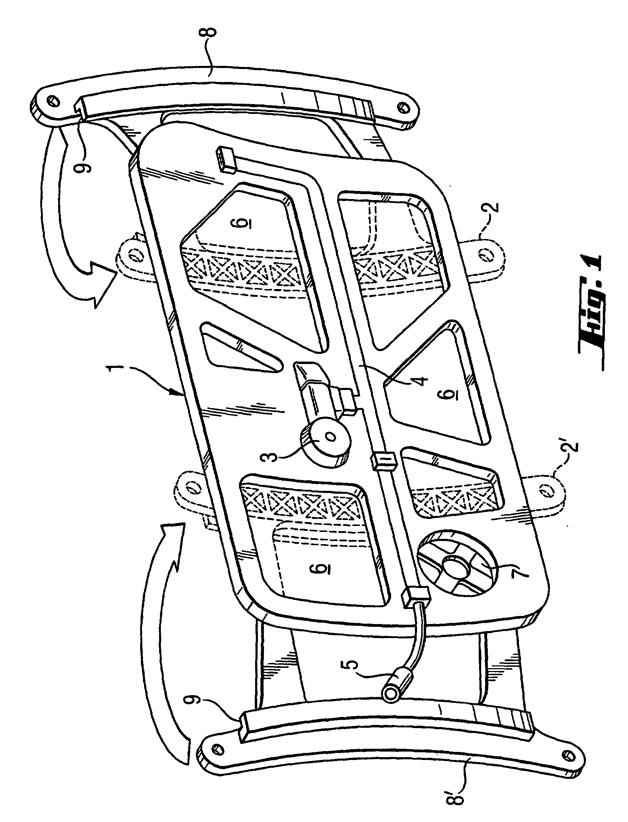

In Figur 1 ist durch Bezugszeichen die Trägerplatte 1 hervorgehoben, die in ihrer dreidimensionalen Geometrie im wesentlichen an die leichte Wölbung einer Kraftfahrzeugtür angepasst ist. Die senkrecht verlaufenden Fensterheberschienen 2/2' für die nicht dargestellten Seitenfenster stellen einen integralen Bestandteil des Türmoduls dar und ersetzen die normalerweise in diesem Bereich nachträglich aufgebrachten Fensterheberschienen aus Metall. Die Fensterheberschienen sind in Figur 1 in ausgeklapptem 8/8' und gestrichelt in eingeklapptem 2/2' Zustand dargestellt. Sie werden bei der Herstellung des erfindungsgemäßen Türmoduls in ausgeklapptem Zustand angespritzt und bei der Montage später eingeklappt, wobei sie zweckmäßigerweise durch geeignete Halteelemente wie Schnapphaken oder ähnliche Befestigungselemente gegen ein unbeabsichtigtes Zurückklappen gesichert sind. Zusätzlich ist in Figur 1 noch erkennbar, dass die Fensterheberschienen 8/8' zur besseren Fensterhebungsgenauigkeit mit Rillen 9 versehen sind, die zur Verbesserung ihrer Verschleißfestigkeit einer nicht sichtbaren Nachbehandlung durch Plasma- oder Coronabehandlung unterzogen werden können.

Die Trägerplatte 1 aus Metall ist in der dargestellten Ausführungsform zur verbesserten Gewichtsreduzierung nicht vollflächig ausgebildet, sondern sie besitzt verschiedene trapezförmig gestaltete Ausnehmungen 6 und insbesondere auch eine Halterung 3 für den nicht dargestellten Elektromotor und eine (hier runde) Ausnehmung 7 für den Lautsprecher. In diesen Bereichen sind diverse Befestigungselemente aus verschiedenen Kunststoffen aufgespritzt. Ferner ist in Figur 1 die Stromzufuhr 4 in Form von Leiterbahnen erkennbar, die über den zentralen Stromanschluß 5 (beispielsweise ein Steckkontakt) mit elektrischem Strom gespeist werden kann. Auch die Befestigungselemente werden in der Outsert-Technik mit auf die Trägerplatte 1 aufgespritzt.

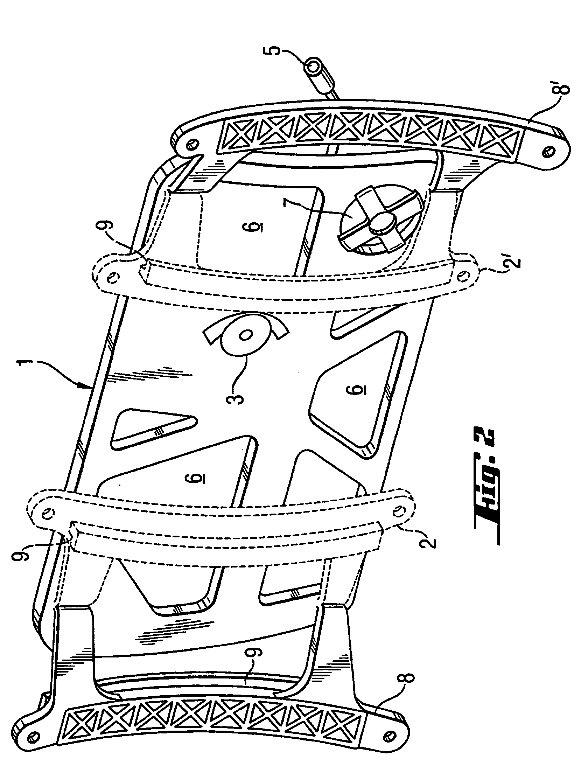

In Figur 2 haben gleiche Bezugszeichen gleiche Bedeutung wie in Figur 1. Insbesondere ist auch dort die Trägerplatte 1 dargestellt sowie gestrichelt die senkrecht verlaufenden Fensterheberschienen 2/2' für die nicht dargestellten Seitenfenster. Die Trägerplatte 1 weist trapezförmige Ausnehmungen 6, eine Halterung 3 für den Elektromotor und eine runde Ausnehmung 7 für den Lautsprecher auf. Seitlich ist der zentrale Stromanschluß 5 erkennbar, der zu den in dieser Darstellung nicht sichtbaren Leiterbahnen führt. Zusätzlich ist in der Figur noch erkennbar, dass die Fensterheberschienen 2/2' bei Herstellung ausgeklappt sind (8/8') und anschließend in den Bereich der Trägerplatte 1 aus Metall wie gestrichelt dargestellt umgeschwenkt und verschnappt werden.

## Patentansprüche

1. Verfahren zum Herstellen eines einstückigen Türmoduls für Kraftfahrzeuge, umfassend eine selbsttragende Trägerplatte (1) aus Metall und Funktionselemente aus Kunststoff, **dadurch gekennzeichnet, dass** in einem Arbeitsschritt Kunststoff für die Funktionselemente an die vorgefertigte Trägerplatte (1) aus Metall in genau definierten, lokal begrenzten Bereichen angespritzt wird und festhaftend und unlösbar mit dieser verbunden wird.

2. Verfahren gemäß Anspruch 1, **dadurch gekennzeichnet, dass** die einzelnen Funktionselemente aus unterschiedlichen Kunststoffen bestehen oder ein einziges Funktionselement aus mehreren verschiedenen Kunststoffen besteht, wobei die Spritzgießschritte sequentiell oder simultan über mehrere Spritzgussaggregate durchgeführt werden.

3. Verfahren gemäß Anspruch 1 oder 2, **dadurch gekennzeichnet, dass** die Trägerplatte (1) in ihrer dreidimensionalen Geometrie im wesentlichen der Geometrie der Kraftfahrzeugtür, in die sie eingebaut werden soll, angepasst ist und eine Schichtdicke im Bereich von 0,1 bis 5 cm besitzt, vorzugsweise von 0,2 bis 2 cm.

4. Verfahren gemäß Anspruch 1, 2 oder 3, **dadurch gekennzeichnet, dass** für die Funktionselemente ein thermoplastisches Kunststoffmaterial verwendet wird, vorzugsweise aus Kunststoffen auf Basis von Polypropylen, Polyamid, Polyester, Polyphenylenoxid, Polyoxymethylen, Polyphenylensulfid, Polyurethan, Polycarbonat oder Blends aus Polyester mit Polyacrylnitril-Butadien-Styrol-Copolymeren oder mit Acrylnitril-Styrol-Acrylester-Pfropfpolymeren, die auch mit Glasfasern oder Kohlenstofffasern verstärkt sein können.

5. Verfahren gemäß Anspruch 1-3 oder 4, **dadurch gekennzeichnet, dass** der Türmodul oder Teile der Funktionselemente einer Nachbehandlung durch eine Coronasprühentladung, eine Plasma- oder Flammbehandlung unterzogen werden.

6. Verfahren gemäß Anspruch 1-4 oder 5, **dadurch gekennzeichnet, dass** Fensterheberschienen aus Kunststoff in ausgeklapptem Zustand (8/8') angespritzt werden und dass nach Erstarren der Kunststoffmasse die ausgeklappten Fensterheberschienen (8/8') in den Bereich der Trägerplatte umgeschwenkt und dort fixiert (2/2') werden.

7. Verfahren gemäß Anspruch 6, **dadurch gekennzeichnet, dass** zusätzlich elektrisch leitfähige Stromkabel oder Flachbandleiter(4) auf angespritzte Halteelemente eingesteckt oder angeclipst werden.

8. Verfahren gemäß Anspruch 6 oder 7, **dadurch gekennzeichnet, dass** zusätzlich auf den Türmodul im seitenrandnahen Bereich oder bei Verwendung einer elektrisch isolierenden Folie auch auf die Folie eine Dichtmasse zur Abdichtung der Fugen zu angrenzenden oder aufgesetzten Oberflächen aufgebracht oder angespritzt wird.

9. Verfahren gemäß Anspruch 6, 7 oder 8, **dadurch gekennzeichnet, dass** zusätzlich Leiterbahnen (4) als elektrisch leitende Verbindungen durch Heißprägen von Aluminium- oder Kupferfolie auf die Trägerplatte (1) oder im Fall der elektrisch isolierenden Folie auf die Folie aufgebracht werden.

10. Verfahren gemäß Anspruch 6-8 oder 9, **dadurch gekennzeichnet, dass** die Fensterheberschienen (2/2') zur Verbesserung ihrer Verschleißfestigkeit mit einer Plasma- oder Coronabehandlung nachbehandelt werden.

## Claims

1. Method for producing a one-piece door module for motor vehicles, comprising a self-supporting carrier panel (1) of metal and functional elements of plastic, **characterized in that** in one working step plastic for the functional elements is injection-moulded onto the prefabricated carrier panel (1) of metal in exactly defined, locally delimited regions and is securely and undetachably connected to it.

2. Method according to Claim 1, **characterized in that** individual functional elements consist of different plastics or a single functional element consists of a number of different plastics, the injection-moulding steps being carried out sequentially or simultaneously by means of a number of injection-moulding units.

3. Method according to Claim 1 or 2, **characterized in that** the carrier panel (1) is adapted in its three-dimensional geometry essentially to the geometry of the motor vehicle door into which it is to be fitted, and has a layer thickness in the range from 0.1 to 5 cm, preferably from 0.2 to 2 cm.

4. Method according to Claim 1, 2 or 3, **characterized in that** a thermoplastic material is used for the functional elements, preferably comprising plastics based on polypropylene, polyamide, polyester, polyphenylene oxide, polyoxymethylene, polyphenylene sulphide, polyurethane, polycarbonate or blends of polyester with polyacrylonitrile-butadiene-styrene copolymers or with acrylonitrile-styrene-acrylate graft polymers, which may also be reinforced with glass fibres or carbon fibres.

5. Method according to Claim 1-3 or 4, **characterized in that** the door module or parts of the functional elements are subjected to a post-treatment by a corona spray discharge, a plasma treatment or a flame treatment.

6. Method according to Claim 1-4 or 5, **characterized in that** window lifter profiles in the folded-out state (8/8') are moulded on and **in that**, after the polymer composition has solidified, the folded-out window lifter profiles (8/8') are pivoted over into the region of the carrier panel and fixed there (2/2').

7. Method according to Claim 6, **characterized in that** electrically conductive power cables or ribbon conductors (4) are additionally inserted or clipped onto moulded-on retaining elements.

8. Method according to Claim 6 or 7, **characterized in that** a sealing composition for sealing the joints with respect to adjacent or placed-on surfaces is applied or injected onto the door module in the region near the side edge or, if an electrically insulating film is used, onto the film.

9. Method according to Claim 6, 7 or 8, **characterized in that** conductor tracks (4) are additionally applied to the carrier panel (1), or in the case of the electrical insulating film to the film, as electrically conducting connections by hot embossing of aluminium or copper foil.

10. Method according to Claim 6-8 or 9, **characterized in that** the window lifter profiles (2/2') are post-treated with a plasma or corona treatment to improve their wear resistance.

## Revendications

1. Procédé de fabrication d'un module de portière en une pièce pour des véhicules automobiles, qui comprend une plaque autoportante de support (1) en métal et des éléments fonctionnels en matière synthétique, **caractérisé en ce que**, dans une étape de travail, de la matière synthétique pour les éléments fonctionnels est injectée dans des régions précisément définies et localement délimitées situées sur la plaque de support préfabriquée (1) et lui est reliée fixement et indissolublement.

2. Procédé selon la revendication 1, **caractérisé en ce que** les éléments fonctionnels individuels sont constitués de différentes matières synthétiques ou **en ce qu'**un même élément fonctionnel est constitué de plusieurs matières synthétiques différentes, les étapes de moulage par injection étant exécutées successivement ou simultanément par plusieurs ensembles de moulage par injection.

3. Procédé selon les revendications 1 ou 2, **caractérisé en ce que** la géométrie tridimensionnelle de la plaque de support (1) est essentiellement adaptée à la géométrie de la portière du véhicule automobile dans laquelle elle doit être montée et présente une épaisseur de couche comprise dans la plage de 0,1 à 5 cm et de préférence de 0,2 à 2 cm.

4. Procédé selon les revendications 1, 2 ou 3, **caractérisé en ce que** pour les éléments fonctionnels, on utilise une matière synthétique thermoplastique, de préférence une matière synthétique à base de polypropylène, de polyamide, de polyester, de poly(oxyde de phényle), de polyoxyméthylène, de poly(sulfure de phénylène), de polyuréthane, de polycarbonate ou de mélanges de polyester avec des copolymères de polyacrylonitrile-butadiène-styrène ou avec des polymères greffés d'acrylonitrile-styrène-acrylester qui peuvent également avoir été renforcés avec des fibres de verre ou des fibres de carbone.

5. Procédé selon les revendications 1-3 ou 4, **caractérisé en ce que** le module de portière ou une partie des éléments fonctionnels subissent un traitement final par décharge corona, traitement au plasma ou traitement à la flamme.

6. Procédé selon les revendications 1-4 ou 5, **caractérisé en ce que** les rails de lève-vitre en matière synthétique sont injectés en position sortie (8/8') et **en ce qu'**après la rigidification de la masse de matière synthétique, les rails de lève-vitre sortis (8/8') sont rabattus dans la région de la plaque de support et y sont fixés (2/2').

7. Procédé selon la revendication 6, **caractérisé en ce que** des câbles électriquement conducteurs ou des conducteurs plats (4) sont enfichés ou fixés par accrochage élastique sur des éléments de maintien injectés.

8. Procédé selon les revendications 6 ou 7, **caractérisé en ce que** dans la région proche du bord latéral ou en cas d'utilisation d'un film électriquement isolant, une pâte d'étanchéité est en outre apportée ou injectée sur le module de portière pour rendre étanche les joints avec les surfaces contiguës ou posées.

9. Procédé selon les revendications 6, 7 ou 8, **caractérisé en ce que** des pistes conductrices (4) qui servent de liaisons électriquement conductrices sont en outre appliquées par estampage à chaud d'un film d'aluminium ou d'un film de cuivre sur la plaque de support (1) ou sont apportées sur le film dans le cas du film électriquement isolant.

10. Procédé selon les revendications 6-8 ou 9, **caractérisé en ce que** les rails de lève-vitre (2/2') subissent un traitement final par corona ou plasma afin d'améliorer leur résistance à l'usure.
